# EUROPÄISCHE PATENTSCHRIFT

(11) **EP 2 929 215 B1**
(45) Veröffentlichungstag und Bekanntmachung des Hinweises auf die Patenterteilung: **07.09.2016**
(21) Anmeldenummer: 13789541.3
(22) Anmeldetag: 11.11.2013
(51) Int. Cl.: F16H 57/021

(54) **LAGERANORDNUNG FÜR EINE ZWISCHENRADMONTAGEGRUPPE**
BEARING ARRANGEMENT FOR AN INTERMEDIATE GEAR ASSEMBLY GROUP
ENSEMBLE PALIER POUR UN MODULE PIGNON INTERMÉDIAIRE

(30) Priorität: 10.12.2012 DE 102012222604
(43) Veröffentlichungstag der Anmeldung: 14.10.2015
(73) Patentinhaber: ZF Friedrichshafen AG, 88046 Friedrichshafen (DE)
(72) Erfinder: LANGWALD, Olaf, 88099 Neukirch-Bernried (DE)
(86) Internationale Anmeldenummer: PCT/EP2013/073463
(87) Internationale Veröffentlichungsnummer: WO 2014/090489

(56) Entgegenhaltungen:
- EP-A1- 1 245 763
- DE-A1- 10 316 321
- DE-A1-102006 046 176
- DE-A1-102008 041 886

## Beschreibung

Die vorliegende Erfindung betrifft eine Lageranordnung für eine Zwischenradbraugruppe bzw. montagegruppe gemäß der im Oberbegriff des Patentanspruches 1 näher definierten Art, und wie sie aus der DE102006046176 A bekannt ist.

Aus der Fahrzeugtechnik ist es bekannt, dass bei Schaltgetrieben die den Rückwärtsgang realisierende Zwischenradmontagegruppe in dem Gehäuse des Getriebes gelagert wird. Um die Zwischenradbaugruppe montieren zu können, wird die Gehäuseteillungsebene bzw. der Flansch in den Bereich der Zwischenradmontagegruppe gelegt. Hierzu wird üblicherweise eine erste Lagerung im vorderen Teil des Gehäuses im Bereich des Gehäusedeckels und eine zweite Lagerung im hinteren Teil des Gehäuses vorgesehen. Eine derartige Lagerungsanordnung ist beispielsweise aus der Druckschrift DE 103 26 866 A1 bekannt.

Ein Nachteil dieser geteilten Lagerung der Zwischenradmontagegruppe ist eine geringe Gehäusefestigkeit und die Gefahr des Aufklaffens oder des Bruches des Gehäuses, insbesondere wenn eine Rückwärtsgangschubbelastung auftritt, bei der die Zwischenradgruppe nach außen gedrückt wird. Um dem entgegenzuwirken, ist eine kostenintensive konstruktive Verstärkung in dem Gehäuse bzw. der beiden Lagerungen erforderlich. Als hintere Lagerung in dem Gehäuse kann ein Lagerbock mit bogenförmiger Abstützung an der Gehäuseinnenwand verwendet wird. Diese Art der Lagerung der Zwischenradmontagegruppe ist jedoch nicht dazu geeignet zusammen mit der Hauptwelle und der Vorgelegewelle des Getriebes als Paket in das hintere Gehäuse montiert zu werden. Ferner ist die Lagerbasis einseitig und daher mit Toleranzfehlern behaftet. Wenn eine geschlossene Lagerung verwendet wird, ergeben sich ebenfalls Montageprobleme, so dass ein zusätzliches Gehäusefenster vorgesehen werden muss.

Der vorliegenden Erfindung liegt die Aufgabe zu Grunde, eine Lageranordnung der eingangs beschriebenen Gattung für eine Zwischenradmontagegruppe vorzuschlagen, die einerseits montagefreundlich ausgeführt ist und andererseits eine sichere Lagerung des Zwischenrades und der Zwischenradwelle ermöglicht.

Diese Aufgabe wird erfindungsgemäß durch die Merkmale des Patentanspruches 1 gelöst, wobei sich vorteilhafte Ausgestaltungen aus den Unteransprüchen, der Beschreibung und den Zeichnungen ergeben.

Dadurch, dass die erfindungsgemäße Lageranordnung einen Lagerbock als Lagereinheit zur beidseitigen Aufnahme der Zwischenradmontagegruppe in dem Gehäuse aufweist, wird die gesamte Zwischenradmontagegruppe in dem Getriebegehäuse abgestürzt und somit aufgrund der einteiligen Lagerung eine Gruppenmontage zusammen mit weiteren Getriebebaugruppen ohne weiteres ermöglicht. Beispielsweise kann die vorgeschlagene Lageranordnung mit dem Lagerbock als separate Einheit vormontiert werden, wobei die Zwischenradmontagegruppe im Lagerbock mittels geeigneten Sicherungselementen oder dergleichen axial und radial fixiert wird.

Die konstruktive Ausgestaltung des Lagerbockes zur beidseitigen Aufnahme der Zwischenradmontagegruppe kann beliebig ausgeführt werden, jedoch bietet sich eine U-Form, umfassend einen Grundkörper mit angeformten Schenkelabschnitten, zur beidseitigen Lagerung besonders an. Zur Abstützung des Lagerbockes können vorzugsweise geeignete Anlageflächen oder dergleichen vorgesehen sein, die beispielsweise prismaförmig zueinander einerseits lagerbockseitig und andererseits gehäuseseitig zur radialen Positionierung des Lagerbockes an der Innenwand des Gehäuses zueinander ausgerichtet sind.

Gemäß einer bevorzugten Ausführungsvariante der Erfindung kann vorgesehen sein, dass die Anlageflächen zur radialen Positionierung des Lagerbockes gleichzeitig auch entsprechende Anschläge, Stufen oder dergleichen aufweisen, die zudem eine axiale Fixierung des Lagerbockes in dem Gehäuse des Getriebes gewährleisten.

Es ist jedoch ohne weiteres denkbar, dass auch anders förmige Ausprägungen der radialen und axialen Positionierung des Lagerbockes bzw. der Lageranordnung sowie der Befestigung zwischen dem Lagerbock und dem Gehäuse vorgesehen sind. Beispielsweise könnten alternativ zu den prismaförmigen Flächen auch gleichförmig gerundete Flächen lagerbockseitig und gehäuseseitige vorgesehen werden, um eine radiale Positionierung zu ermöglichen.

Zur Befestigung des Lagerbockes in dem Gehäuse des Getriebes kann beispielsweise zumindest eine Verschraubung oder dergleichen vorgesehen sein. Es sind jedoch auch andere zum Beispiel formschlüssige Verbindungen denkbar, die gleichzeitig als zusätzliche innenliegende Verstärkung dienen und somit die Gehäuse- und Getriebefestigkeit bzw. Steifigkeit erhöhen.

Nachfolgend wird die vorliegende Erfindung anhand der Zeichnungen weiter erläutert. Es zeigen:
Figur 1 eine schematische dreidimensionale Ansicht eines Ausschnittes aus einem Getriebegehäuse mit einer möglichen Ausführungsvariante einer erfindungsgemäßen Lageranordnung für eine Zwischenradmontagegruppe;
Figur 2 eine teilgeschnittene, dreidimensionale Ansicht der Lageranordnung;
Figur 3 eine dreidimensionale Ansicht einer Explosionsdarstellung der Lageranordnung mit einem Lagerbock und dem korrespondierenden Innenwandabschnitt des Gehäuses des Getriebes;
Figur 3A eine Einzelteilansicht des Lagerbockes der Lageranordnung; und
Figur 4 eine geschnittene Ansicht des in dem Gehäuse des Getriebes montierten Lagerbockes der Lageranordnung.

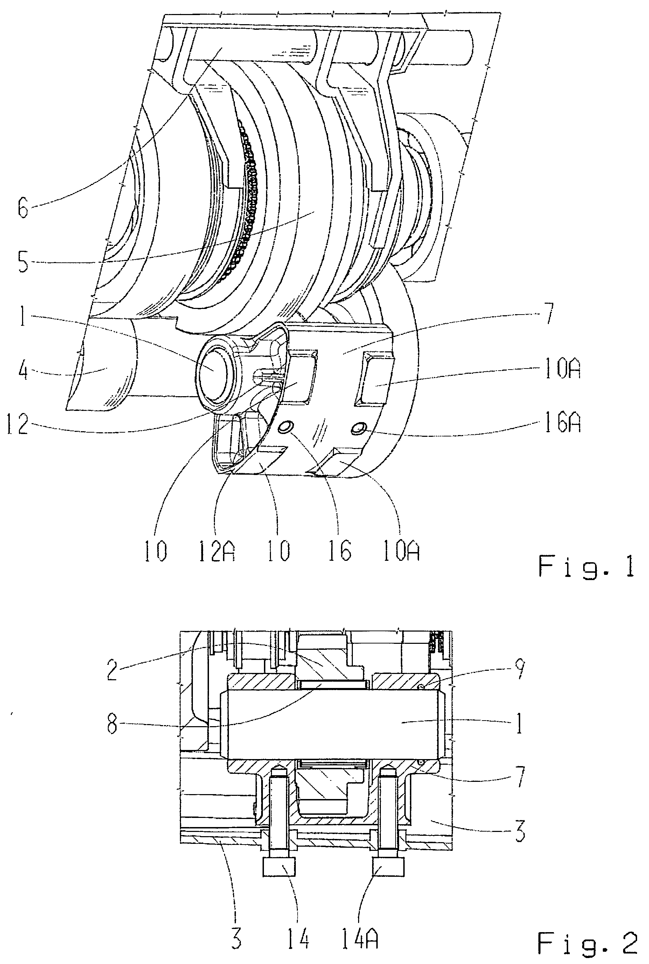

In den Figuren 1 bis 4 ist eine erfindungsgemäße Lageranordnung zum sicheren Lagern einer Zwischenradmontagegruppe beispielhaft dargestellt. Die Zwischenradbaugruppe umfasst eine Zwischenwelle 1 und ein Zwischenrad 2 zur Drehrichtungsumkehr zur Realisierung einer Rückwärtsgangübersetzung bei einem in einem Gehäuse 3 angeordneten Getriebe.

Wie in Figur 1 dargestellt, ist neben der Zwischenradmontagegruppe eine Vorgelegewelle-Montagegruppe 4, eine Hauptwelle-Montagegruppe 5 und eine Schaltungs-Montagegruppe 6 zum Schalten der Gangzahnräder des Getriebes in dem Gehäuse 3 angeordnet.

Die vorgeschlagene Lageranordnung für die Zwischenradmontagegruppe umfasst einen Lagerbock 7 als Lagereinheit zur beidseitigen Aufnahme der gesamten Zwischenradbaugruppe in dem Gehäuse 3. Der Lagerbock 7 bildet etwa eine U-Form aus einem Grundkörper mit zwei angeformten schenkelförmigen Wellenaufnahmen, zwischen denen das über ein Zwischenradlager 8 auf der Zwischenwelle 1 gelagerte Zwischenrad 2 angeordnet ist. Zur Sicherung der Zwischenwelle 1 ist beispielsweise ein Sicherungsring 9 vorgesehen, wie dies beispielsweise in Figur 2 angedeutet ist.

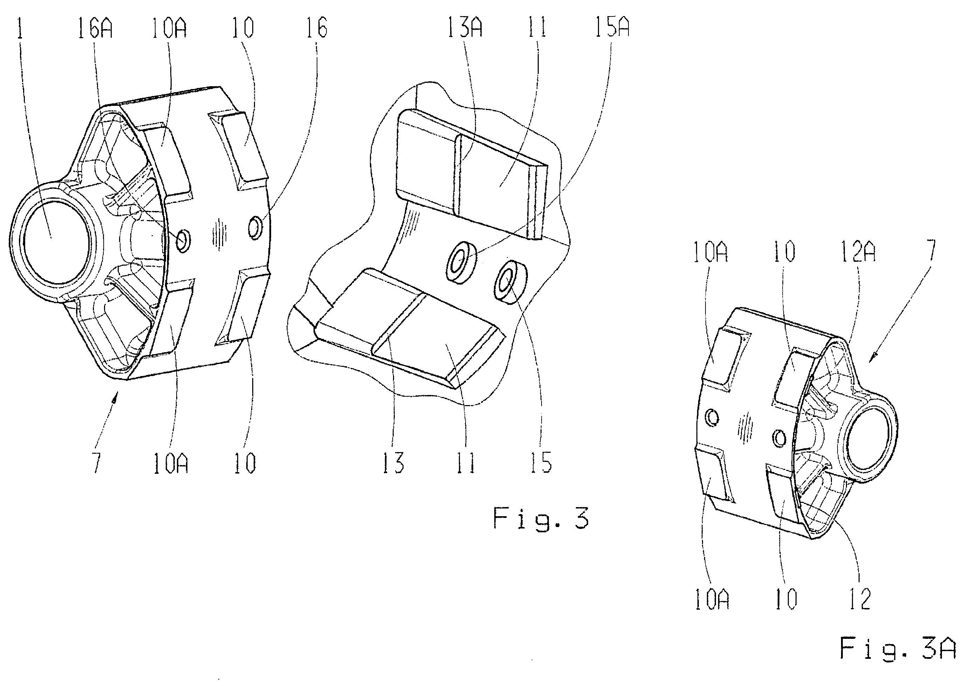

Gemäß Figur 3 sind zur radialen Abstützung des Lagerbockes 7 Paare 10, 10A und 11, 11 A lagerbockseitiger und gehäuseseitiger Anlageflächen, die zueinander prismaförmig in der Art eines Messprismas ausgerichtet sind. Die Anlageflächen selbst sind jeweils vorzugsweise plan ausgeführt. Somit sind zwei Paar 10, 10A lagerbockseitige Anlageflächen an der Außenseite des Grundkörpers des Lagerbockes 7 und zwei Paar 11, 11A gehäuseseitige Anlageflächen an der Innenwand des Gehäuses 3 vorgesehen. Dabei sind die Anlageflächen eines jeden Paares 10, 10A, 11, 11 A in einem vorbestimmten Winkel zueinander ausgerichtet. In den Figuren ist beispielhaft ein Winkel von etwa 45 ° gewählt, jedoch sind je nach Anwendungsbeispiel auch andere Anordnungswinkel denkbar.

Wie bei einem Messprisma sind zum exakten Ausrichten der Zwischenwelle 1 sämtliche Paare 10, 10A, 11, 11A von Anlageflächen identisch zueinander ausgerichtet. Um eine stabile Aufnahme der Zwischenwelle 1 durch den Lagerbock 7 zu gewährleisten, sind die lagerbockseitigen Paare 10 und 10A sowie die gehäuseseitigen Paare 11 und 11 A in einem vorbestimmten axialen Abstand voneinander beabstandet.

Die axiale Positionierung und Ausrichtung des Lagerbockes 7 in dem Gehäuse 3 des Getriebes wird durch lagerbockseitige und gehäuseseitige miteinander korrespondierende Axialanschläge 12, 12A und 13, 13A ermöglicht.

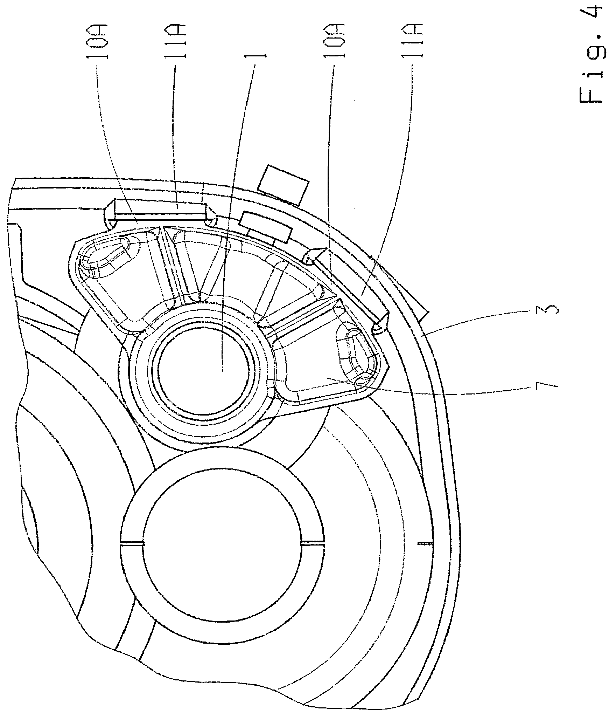

Die Befestigung des Lagerbockes 7 an dem Gehäuse 3 des Getriebes wird durch geeignete Befestigungselemente zum Beispiel kraftschlüssig oder auch formschlüssig ermöglicht. Bei dem in den Figuren dargestellten Ausführungsbeispiel sind als Befestigungselemente 2 Befestigungsschrauben 14, 14A vorgesehen. Die Befestigungsschrauben 14, 14A sind symmetrisch jeweils zwischen den korrespondierenden lagerbockseitigen und gehäuseseitigen Paarungen 10 und 11 bzw. 10A und 11 A durch das Gehäuse 3 mittels Durchführungsbohrungen 15, 15A geführt und werden in korrespondierenden Gewindebohrungen 16, 16A geschraubt. Die Befestigungsschrauben 14, 14A dienen hierbei nur zur Befestigung des Lagerbockes 7 in dem Gehäuse 3 des Getriebes, wobei die Kraftrichtung der Befestigungsschrauben 14, 14A, die symmetrisch zwischen den im Winkel zueinander stehenden Anlageflächen angeordnet sind, durch einen Pfeil in Figur 4 angedeutet ist. Zur radialen Positionierung sind die paarweise angeordneten Anlageflächen vorgesehen. Die axiale Ausrichtung erfolgt über die vorgesehenen korrespondierenden Axialanschlägen 12, 12A 13, 13A, wie insbesondere in den Figuren 3 und 3A angedeutet ist.

Durch den einteiligen Lagerbock 7 zur Aufnahme der gesamten Zwischenradbaugruppe kann unabhängig von anderen Montagegruppen eine Vormontage der Zwischenradmontagegruppe ermöglicht werden. Auf diese Weise stellt die Zwischenradmontagegruppe bei der erfindungsgemäßen Lageranordnung für die Getriebemontage kein begrenzendes Element dar und kann zusammen oder separat mit den anderen Montagegruppen montiert werden.

### Bezugszeichen

- 1: Zwischenwelle
- 2: Zwischenrad
- 3: Gehäuse
- 4: Vorgelegewelle-Montagegruppe
- 5: Hauptwelle-Montagegruppe
- 6: Schaltung-Montagegruppe
- 7: Lagerbock
- 8: Zwischenradlager
- 9: Sicherungsring
- 10: lagerbockseitiges Paar von Anlageflächen
- 10A: lagerbockseitiges Paar von Anlageflächen
- 11: gehäuseseitiges Paar von Anlageflächen
- 11A: gehäuseseitiges Paar von Anlageflächen
- 12: lagerbockseitiger Axialanschlag
- 12A: lagerbockseitiger Axialanschlag
- 13: gehäuseseitiger Axialanschlag
- 13A: gehäuseseitiger Axialanschlag
- 14: Befestigungsschraube
- 14A: Befestigungsschraube
- 15: Durchführungsbohrung
- 15A: Durchführungsbohrung
- 16: Gewindebohrung
- 16A: Gewindebohrung

## Patentansprüche

1. Lageranordnung für eine Zwischenradmontagegruppe mit einer Zwischenwelle (1) und einem Zwischenrad (2) zur Drehrichtungsumkehr für eine Rückwärtsgangübersetzung eines in einem Gehäuse (3) angeordneten Getriebes, **dadurch gekennzeichnet, dass** ein einteilig ausgebildeter Lagerbock (7) zur beidseitigen Aufnahme der Zwischenradmontagegruppe in dem Gehäuse (3) vorgesehen ist und zur Abstützung des Lagerbockes (7) in dem Gehäuse (3) lagerbockseitige Anlageflächen vorgesehen sind, die mit gehäuseseitigen Anlageflächen zur radialen Positionierung des Lagerbockes (7) an der Innenwand des Gehäuses (3) korrespondieren.

2. Lageranordnung nach Anspruch 1, **dadurch gekennzeichnet, dass** der Lagerbock (7) im Wesentlichen eine U-Form aus einem Grundkörper mit zwei angeformten schenkeiförmigen Wellenaufnahmen bildet, zwischen denen das auf der Zwischenwelle (1) gelagerte Zwischenrad (2) angeordnet ist.

3. Lageranordnung nach Anspruch 1, **dadurch gekennzeichnet, dass** zwei Paar (10, 10A) lagerbockseitige Anlageflächen an der Außenseite des Grundkörpers des Lagerbockes (7) und zwei Paar (11, 11A) gehäuseseitige Anlageflächen an der Innenwand des Gehäuses (3) vorgesehen sind.

4. Lageranordnung nach Anspruch 3, **dadurch gekennzeichnet, dass** die beiden Anlagenflächen eines jeden Paares (10, 10A, 11, 11 A) in einem vorbestimmten Winkel zueinander ausgerichtet sind.

5. Lageranordnung nach Anspruch 3 oder 4, **dadurch gekennzeichnet, dass** sämtliche Paare (10, 10A, 11, 11A) von Anlageflächen identisch zueinander ausgerichtet sind.

6. Lageranordnung nach einem der Ansprüche 3 bis 5, **dadurch gekennzeichnet, dass** die beiden jeweils einander zugewandten lagerbockseitigen und gehäuseseitigen Paarungen (10, 11; 10A, 11 A) in einem vorbestimmten axialen Abstand zueinander angeordnet sind.

7. Lageranordnung nach einem der Ansprüche 1 oder 3 bis 6, **dadurch gekennzeichnet, dass** zumindest eine einander zugewandte lagerbockseitige und gehäuseseitige Paarung (10, 11) korrespondierende Axialanschläge (12, 12A, 13, 13A) zur axialen Positionierung des Lagerbockes (7) in dem Gehäuse (3) aufweist.

8. Lageranordnung nach einem der vorangehenden Ansprüche, **dadurch gekennzeichnet, dass** der Lagerbock (7) über zumindest ein lösbares Befestigungselement mit dem Gehäuse (3) befestigt ist.

9. Lageranordnung nach Anspruch 8, **dadurch gekennzeichnet, dass** als Befestigungselement eine Befestigungsschrauben (14, 14A) vorgesehen ist, bei der in dem Grundkörper des Lagerbockes (7) zumindest eine Gewindebohrung (16, 16A) und eine in dem Gehäuse (3) vorgesehene Durchführungsbohrung (15, 15A) vorgesehen ist.

10. Lageranordnung nach einem der vorangehenden Ansprüche, **dadurch gekennzeichnet, dass** die Zwischenradmontagegruppe über den Lagerbock (7) unabhängig von den anderen Getriebemontagegruppen in dem Gehäuse (3) des Getriebes vormontierbar ist.

## Claims

1. Bearing arrangement for an intermediate gear assembly group having an intermediate shaft (1) and an intermediate gear (2) for the reversal of the direction of rotation for a reverse gear transmission ratio of a transmission which is arranged in a housing (3), **characterized in that** a bearing block (7) which is configured in one piece is provided for receiving the intermediate gear assembly group on both sides in the housing (3), and bearing block-side bearing faces are provided for supporting the bearing block (7) in the housing (3), which bearing faces correspond with housing-side bearing faces for radial positioning of the bearing block (7) on the inner wall of the housing (3).

2. Bearing arrangement according to Claim 1, **characterized in that** the bearing block (7) forms substantially a U-shaped main body with two integrally formed limb-shaped shaft receptacles, between which the intermediate gear (2) which is mounted on the intermediate shaft (1) is arranged.

3. Bearing arrangement according to Claim 1, **characterized in that** two pairs (10, 10A) of bearing block-side bearing faces are provided on the outer side of the main body of the bearing block (7) and two pairs (11, 11A) of housing-side bearing faces are provided on the inner wall of the housing (3).

4. Bearing arrangement according to Claim 3, **characterized in that** the two bearing faces of each pair (10, 10A, 11, 11A) are oriented at a predefined angle with respect to one another.

5. Bearing arrangement according to Claim 3 or 4, **characterized in that** all pairs (10, 10A, 11, 11A) of bearing faces are oriented identically with respect to one another.

6. Bearing arrangement according to one of Claims 3 to 5, **characterized in that** the two bearing block-side and housing-side pairs (10, 11; 10A, 11A) which face one another in each case are arranged at a predefined axial spacing from one another.

7. Bearing arrangement according to one of Claims 1 or 3 to 6, **characterized in that** at least one bearing block-side and housing-side pair (10, 11) which faces one another has corresponding axial stops (12, 12A, 13, 13A) for axial positioning of the bearing block (7) in the housing (3).

8. Bearing arrangement according to one of the preceding claims, **characterized in that** the bearing block (7) is fastened to the housing (3) via at least one releasable fastening element.

9. Bearing arrangement according to Claim 8, **characterized in that** a fastening screw (14, 14A) is provided as fastening element, in the case of which fastening screw (14, 14A) at least one threaded bore (16, 16A) is provided in the main body of the bearing block (7) and a leadthrough bore (15, 15A) is provided which is provided in the housing (3).

10. Bearing arrangement according to one of the preceding claims, **characterized in that** the intermediate gear assembly group can be pre-mounted in the housing (3) of the transmission via the bearing block (7) independently of the other transmission assembly groups.

## Revendications

1. Agencement de palier pour un module de montage de pignon intermédiaire comprenant un arbre intermédiaire (1) et un pignon intermédiaire (2) pour une inversion du sens de rotation pour un transfert de rapport de marche arrière d'une boîte de vitesses disposée dans un carter (3), **caractérisé en ce qu'**un coussinet (7) réalisé d'une seule pièce pour recevoir des deux côtés le module de montage de pignon intermédiaire est prévu dans le carter (3) et des surfaces d'appui du côté du coussinet sont prévues pour supporter le coussinet (7) dans le carter (3), lesquelles correspondent à des surfaces d'appui du côté du carter pour le positionnement radial du coussinet (7) contre la paroi intérieure du carter (3).

2. Agencement de palier selon la revendication 1, **caractérisé en ce que** le coussinet (7) forme essentiellement une forme en U constituée d'un corps de base avec deux logements d'arbre façonnés en forme de branches, entre lesquels est disposé le pignon intermédiaire (2) supporté sur l'arbre intermédiaire (1).

3. Agencement de palier selon la revendication 1, **caractérisé en ce que** deux paires (10, 10A) de surfaces d'appui du côté du coussinet sont prévues au niveau du côté extérieur du corps de base du coussinet (7) et deux paires (11, 11A) de surfaces d'appui du côté du carter sont prévues au niveau de la paroi intérieure du carter (3).

4. Agencement de palier selon la revendication 3, **caractérisé en ce que** les deux surfaces d'appui de chaque paire (10, 10A, 11, 11A) sont orientées suivants un angle prédéterminé l'une par rapport à l'autre.

5. Agencement de palier selon la revendication 3 ou 4, **caractérisé en ce que** toutes les paires (10, 10A, 11, 11A) de surface d'appui sont orientées de manière identique les unes par rapport aux autres.

6. Agencement de palier selon l'une quelconque des revendications 3 à 5, **caractérisé en ce que** les deux appariements (10, 11 ; 10A, 11A) tournés l'un vers l'autre, respectivement du côté du coussinet et du côté du carter, sont disposés à une distance axiale prédéterminée l'un de l'autre.

7. Agencement de palier selon l'une quelconque des revendications 1 ou 3 à 6, **caractérisé en ce qu'**au moins un appariement (10, 11) du côté du coussinet et du côté du carter, en regard l'un de l'autre, présente des butées axiales correspondantes (12, 12A, 13, 13A) pour le positionnement axial du coussinet (7) dans le carter (3).

8. Agencement de palier selon l'une quelconque des revendications précédentes, **caractérisé en ce que** le coussinet (7) est fixé au carter (3) par le biais d'au moins un élément de fixation desserrable.

9. Agencement de palier selon la revendication 8, **caractérisé en ce que** l'on prévoit en tant qu'élément de fixation une vis de fixation (14 14A), au moins un alésage fileté (16, 16A) étant prévu dans le corps de base du coussinet (7) et un alésage traversant (15, 15A) étant prévu dans le carter (3).

10. Agencement de palier selon l'une quelconque des revendications précédentes, **caractérisé en ce que** le module de montage de pignon intermédiaire peut être prémonté par le biais du coussinet (7) indépendamment des autres modules de montage de boîte de vitesses dans le carter (3) de la boîte de vitesses.
